**Europäisches Patentamt**

**European Patent Office**

**Office européen des brevets**

(19)

(11) Veröffentlichungsnummer: **0 111 819**
**B1**

(12) **EUROPÄISCHE PATENTSCHRIFT**

(45) Veröffentlichungstag der Patentschrift: ·
**28.10.87**

(51) Int. Cl.⁴: **B 60 J 3/02**

(21) Anmeldenummer: **83112223.9**

(22) Anmeldetag: **06.12.83**

(54) Sonnenblende, insbesondere für Fahrzeuge sowie Verfahren zu ihrer Herstellung.

(30) Priorität: **17.12.82  DE 3246784**

(43) Veröffentlichungstag der Anmeldung:
**27.06.84 Patentblatt 84/26**

(45) Bekanntmachung des Hinweises auf die Patenterteilung:
**28.10.87 Patentblatt 87/44**

(84) Benannte Vertragsstaaten:
**DE FR GB IT SE**

(56) Entgegenhaltungen:
**CH - A - 388 793**

(73) Patentinhaber: **Gebr. Happich GmbH,
Postfach 10 02 49 Clausenbrücke 1,
D-5600 Wuppertal 1 (DE)**

(72) Erfinder: **Ebert, Charles, 7 Rue du Parc, Luxeull (FR)**

## Beschreibung

Die Erfindung bezieht sich auf eine Sonnenblende, insbesondere für Fahrzeuge, deren Sonnenblendenkörper eine darin eingebettete Verstärkungseinlage aufweist, die aus einem zu einem etwa rechteckigen Rahmen gebogenen Metalldraht und zumindest einer Rahmenaussteifung besteht. Die Erfindung bezieht sich weiterhin auf ein Verfahren zum Herstellen der Sonnenblende.

Die DE-C-949 143 bezieht sich auf eine Sonnenblende, in derem aus weichem, nachgiebigen Material gebildeten Sonnenblendenkörper eine Verstärkungseinlage eingelagert ist, die aus einem zu einem etwa rechteckigen Rahmen gebogenen Draht besteht. Es ist schon erstaunlich, dass die zumindest in Europa meistverbreitetsten Sonnenblenden auch heute noch nach der Lehre dieser Druckschrift hergestellt werden, obgleich Verstärkungseinlagen für Sonnenblendenkörper aus Vollkunststoff existieren (vgl. z.B. DE-C-26 33 002), die aber im Vergleich zu aus Drahtrahmen bestehenden im wesentlich geringeren Masse eingesetzt werden.

Obgleich sich Sonnenblenden der in der DE-C-949 143 beschriebenen Art dem Grunde nach hervorragend bewährt haben, sind sie infolge der gestiegenen Qualitätsanforderungen verbesserungsbedürftig und es ist deshalb Zweck der vorliegenden Erfindung, eine Sonnenblende zu schaffen, die den heutigen Qualitätsanforderungen gerecht wird.

Die Qualitätsanforderungen bei der bekannten Sonnenblende werden im wesentlichen deshalb nur unzureichend erfüllt, weil es den Sonnenblendenkörpern an Steifigkeit fehlt und weil sich die Sonnenblendenkörper bei hohen Temperaturen verformen können.

Die Sonnenblendenkörper nach der DE-C-949 143 bestehen aus einem etwa rechteckigen Drahtrahmen mit einem an einem Eckbereich derselben angeordneten Lagergehäuse für eine Sonnenblendenachse. Der Drahtrahmen mit Lagergehäuse sitzt zwischen zwei Schaumstoffbahn-Zuschnitten, die ihrerseits aussenseitig jeweils mit einer Folie abgedeckt sind. Die Folien sind randseitig umlaufend miteinander verschweisst und bilden den das äussere Erscheinungsbild des Sonnenblendenkörpers bestimmenden Mantel. Bei diesem grundsätzlichen Sonnenblendenkörperaufbau wird also die Steifigkeit des Sonnenblendenkörpers ausschliesslich durch den in dessem Randbereich umlaufend eingelagerten Drahtrahmen bewirkt, was als nicht ausreichend empfunden wird.

Der erwähnte Nachteil der Verformung der Sonnenblendenkörper bei hohen Temperaturen ist auf den geschilderten Aufbau der bekannten Sonnenblende zurückzuführen und weiterhin darauf, dass die Hüllfolie, die, abgesehen von der dekorativen Aufgabe, auch die Gesamtheit der Elemente des Sonnenblendenkörpers zusammenhalten soll, oberhalb bestimmter Temperaturen dieser Aufgabe nicht mehr gewachsen ist. Die im allgemeinen aus PVC bestehende Hüllfolie verformt sich nämlich bei Temperaturen oberhalb von etwa 80 bis 90 °C und ist bei diesen Temperaturen, die im Sommerhalbjahr oftmals in Fahrzeugen auftreten können, nicht mehr geeignet, den erforderlichen Zusammenhalt der Sonnenblendenkörperelemente zu gewährleisten.

In immer stärkerem Masse werden zudem die Sonnenblendenkörper mit Spiegeln ausgerüstet, die in einem an der Hüllfolie befestigten Rahmen sitzen. Der Spiegel mit Spiegelrahmen hängt mit seinem Gewicht an der Hüllfolie und verstärkt noch deren Verformung bei erhöhten Temperaturen. Da die Hüllfolie ihre Aufgabe als die Elemente zusammenhaltende Umhüllung nicht mehr erfüllen kann, können die Schaumstoffzuschnitte leicht verrutschen, wodurch dann der Sonnenblendenkörper eine bleibende Verformung erleidet.

Es sind zwar Sonnenblendenkörper bekannt, bei denen der Drahtrahmen mit einem relativ formbeständigen Kunststoffschaum umschäumt ist, welcher den nur noch mit einer Hüllfolie zu ummantelnden, in sich festen Sonnenblendenkörper bildet. Derartige Sonnenblendenkörper sind aber vergleichsweise teuer und kommen auf Grund des Preises nur für Oberklassen-Fahrzeuge in Betracht.

Es ist hiernach Aufgabe der Erfindung, den Sonnenblendenkörper einer Sonnenblende der eingangs näher erwähnten Art in bezug auf Steifigkeit und Formbeständigkeit zu verbessern.

Diese Aufgabe wird erfindungsgemäss durch die im kennzeichnenden Teil des Anspruchs 1 angegebenen Gestaltungsmerkmale gelöst.

Durch die erfindungsgemässen Massnahmen wird die Steifigkeit und die Formbeständigkeit des Sonnenblendenkörpers beträchtlich verbessert, und zwar weil die Schaumstoffzuschnitte nunmehr innerhalb des Drahtrahmens eine zusätzliche Auflagefläche vorfinden, auf der sie auch mittels eines Klebers aufgeklebt sein können. Damit ist die Hüllfolie in bezug auf den Zusammenhalt der Einzelelemente des Sonnenblendenkörpers wesentlich entlastet und braucht im wesentlichen nur noch ihrer dekorativ wirkenden Aufgabe gerecht zu werden. Durch die Massnahme, eine Längsstrebe und mehrere Querstreben vorzusehen, wird eine besonders gute, ein Durchhängen der Schaumstoffzuschnitte ausschliessende Auflagefläche für die Schaumstoffzuschnitte geschaffen, was der Steifigkeit, der Formbeständigkeit sowie der Entlastung der Umhüllungsfolie zugute kommt. Durch die Einstückigkeit der Rahmenaussteifung und insbesondere durch deren Ausbildung als Kunststoffspritzgussteil wird die kostenmässige Belastung in durchaus vertretbaren Grenzen gehalten.

Eine bevorzugte Weiterbildung der Erfindung sieht einen einstückig und materialeinheitlich mit dem Kunststoff-Spritzguss-Formteil ausgebildeten Spiegelaufnahmerahmen vor, der gegenüber der Strebe in der Ebene versetzt sein und ein angeformtes Auflager für den Spiegel aufweisen kann, welches aus einem umlaufenden Falz oder aus den Spiegel rückseitig abstützenden Nocken besteht. Auf diese Weise trägt die Umhüllungsfolie nicht mehr wie bisher den Spiegelaufnahmerahmen nebst Spiegel, sondern dieser ist nunmehr starr mit dem Drahtrahmen verbunden und wird daher auch von diesem getragen.

Eine weitere bevorzugte Ausgestaltung der Erfindung ist gekennzeichnet durch einen mit dem Spiegelaufnahmerahmen verbundenen Zusatzrahmen, der auf der Sichtseite des Spiegels, dessen umlaufenden Randbereich bedeckend, aufliegt und aus hochfrequenzschweissbarem Material besteht. Diese Massnahme ist insofern von wesentlicher Bedeutung, als sie es ermöglicht, die Umhüllungsfolie, die im Bereich des Spiegels einen fensterartigen Querschnitt aufweist, unmittelbar auf den Zusatzrahmen aufzuschweissen. Damit aber kann das Kunststoff-Spritzguss-Formteil mit Spiegelaufnahmerahmen aus einem Material hergestellt werden, welches, da es nicht hochfrequenzschweissbar oder durch Ultraschall oder durch Schmelzen schweissbar sein muss, besonders preiswert ist und ein geringes spezifisches Gewicht aufweist. Beispielsweise kann das Kunststoff-Spritzguss-Formteil mit Spiegelaufnahmerahmen aus Polypropylen und der Zusatzrahmen aus einem Polycarbonat bestehen, wobei sich Polypropylen durch besondere Kostengünstigkeit und das wesentlich teurere Polycarbonat durch Hochfrequenzschweissbarkeit auszeichnet. Dabei ist es noch möglich, an den Zusatzrahmen über ein Filmscharnier einstückig eine Spiegelabdeckklappe anzuformen.

Der Zusatzrahmen kann bereichsweise durch Umspritzen in dem Spiegelaufnahmerahmen eingebettet oder alternativ durch ineinanderrastbare Klipselemente mit diesem verbunden sein.

Eine weitere bevorzugte Ausgestaltung der Erfindung sieht vor, dass das Kunststoff-Spritzguss-Formteil einstückig und materialeinheitlich mit einem Lagergehäuse ausgebildet ist, welches in einem Eckbereich des Drahtrahmens befestigt ist und zur Lagerung einer Sonnenblendenachse dient. Dabei weist das Lagergehäuse zweckmässigerweise eine durch Umspritzen eingelagerte, die Sonnenblendenachse radial beaufschlagende Feder auf. Weiterhin kann in vorteilhafter Weise das Kunststoff-Spritzguss-Formteil auch noch einstückig und materialeinheitlich mit einer Gegenlagerachse ausgebildet sein.

Das Kunststoff-Spritzguss-Formteil dient damit nicht nur zur Verbindung der Rahmenschenkel und zur sinnvollen Abstützung der Schaumstoffzuschnitte, sondern es vereinigt alle die Elemente des Sonnenblendenkörpers, die bisher separat gefertigt, auf Lager gehalten und montiert werden mussten, zu einem einstückigen Baukörper.

In weiterer Ausgestaltung der Erfindung können die Enden der Längsstrebe und die der Querstreben sowie das Lagergehäuse und die Gegenlagerachse unmittelbar an dem Drahtrahmen angespritzt sein, wobei die entsprechenden Rahmenbereiche des Drahtrahmens vorteilhafterweise vollständig im Kunststoffmaterial eingelagert sind. Es ist aber auch möglich, das Kunststoff-Spritzguss-Formteil mit den angespritzten Elementen separat zu fertigen und durch eine Klipsverbindung an dem Drahtrahmen festzulegen.

Das zur Herstellung der Sonnenblende vorgesehene Verfahren ist in den Ansprüchen 12 und 13 angegeben.

Ein Ausführungsbeispiel der Erfindung wird nachfolgend anhand der Zeichnung näher erläutert. Es zeigen

Fig. 1 eine Draufsicht auf eine mit einer Aussteifung versehene Verstärkungseinlage für den Sonnenblendenkörper einer Sonnenblende,

Fig. 2 einen Schnitt etwa folgend der Linie A–A nach Fig. 1,

Fig. 3 einen Schnitt etwa folgend der Linie B–B nach Fig. 1,

Fig. 4 eine gegenüber Fig. 1 abgewandelte Draufsicht auf eine mit einer Aussteifung versehene Versteifungseinlage für den Sonnenblendenkörper einer Sonnenblende

und

Fig. 5 einen Schnitt etwa folgend der Linie C–C nach Fig. 4, wobei die Verstärkungseinlage mit der sie einbettenden Polsterung und der diese umgebenden Hüllfolie dargestellt ist.

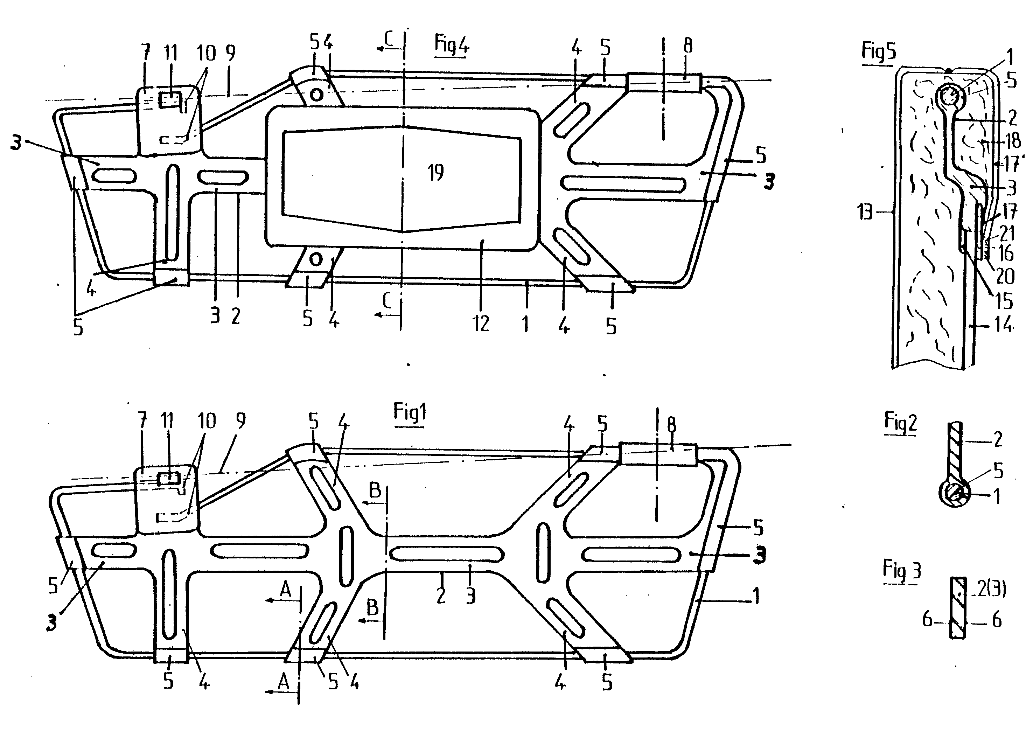

Fig. 1 zeigt eine für den Sonnenblendenkörper einer Fahrzeugsonnenblende bestimmte Verstärkungseinlage, die aus einem in einer Ebene zu einem etwa rechteckigen Rahmen 1 gebogenen Drahtabschnitt besteht.

Innerhalb der Rahmenöffnung ist ein Kunststoff-Spritzguss-Formteil 2 angeordnet, das aus einer Längsstrebe 3 und aus mehreren, materialeinheitlich und einstückig mit dieser ausgebildeten Querstreben 4 besteht. Bei der Herstellung der Verstärkungseinlage wird zweckmässigerweise so verfahren, dass der Rahmen 1 in das Formnest einer Spritzgussform eingelegt und sodann + bzw. die Längsstrebe 3 und die Querstreben 4 spritzgegossen werden, derart, dass sie an ihren freien Enden die entsprechenden Drahtabschnitte aufnehmende Ösen 5 (siehe Fig. 2) bilden.

Die Längsstrebe 3 und die Querstreben 4 weisen ein etwa rechteckiges Querschnittsprofil (siehe Fig. 3) auf, wodurch ober- und unterseitige Auflageflächen 6 für die auf der Versteifungseinlage zur Auflage kommenden Schaumstoffzuschnitte gebildet sind.

Das Kunststoff-Spritzguss-Formteil ist in Fig. 1 zeichnungslinksseitig einstückig und materialeinheitlich mit einem Lagergehäuse 7 und zeichnungsrechtsseitig ebenfalls einstückig und materialeinheitlich mit einer Gegenlagerachse 8 ausgebildet. Das Lagergehäuse 7 dient zur Lagerung einer nicht gezeigten Sonnenblendenachse, während die Gegenlagerachse in der montierten Lage der Sonnenblende von einem Gegenlagergehäuse (nicht gezeigt) aufgenommen wird. Der Sonnenblendenkörper ist sodann um die Achse 9 verschwenkbar gelagert.

Das Lagergehäuse 7 ist ebenso wie die Gegenlagerachse 8 und die Streben 3, 4 unmittelbar an den Rahmen 1 angespritzt. Vorzugsweise sind dabei die Endbereiche 10 des Rahmens 1 im Lagergehäuse 7 eingelagert. Eine Besonderheit der Erfindung besteht noch darin, dass das Lagergehäuse 7 nicht nur Teilbereiche des Rahmens 1, sondern auch eine Momentenfeder 11 durch Umspritzen einlagert.

Fig. 4 zeigt eine gegenüber der vorbeschriebenen vervollkommnete Verstärkungseinlage insofern, als das Kunststoff-Spritzguss-Formteil 2 hier zusätzlich mit einem Spiegelaufnahmerahmen 12 einstückig und materialeinheitlich ausgebildet ist, der im etwa mittleren Rahmenbereich angeordnet ist. Im übrigen entspricht das Ausführungsbeispiel im wesentlichen dem nach Fig. 1 bis 3 und weist demgemäss für übereinstimmende Teile auch übereinstimmende Bezugszeichen auf.

Die Ausbildung des Spiegelaufnahmerahmens 12 ist besonders deutlich in Fig. 5 dargestellt. Es ist ersichtlich, dass der Spiegelaufnahmerahmen 12 gegenüber den Streben in der Ebene versetzt ist und sich nahe an der Aussenfläche des Sonnenblendenkörpers 13 befindet. An dem Spiegelaufnahmerahmen 12 ist ein Auflager für den Spiegel 14 angeformt, welches aus einem umlaufenden Falz oder, wie dargestellt, aus den Spiegel 14 rückseitig abstützenden Nocken 15 besteht.

Fig. 5 zeigt eine weitere Besonderheit insofern, als der Spiegelaufnahmerahmen 12 mit einem den umlaufenden Randbereich des Spiegels 14 übergreifenden Zusatzrahmen 16 ausgerüstet ist. Der Zusatzrahmen 16 kann mit dem Spiegelaufnahmerahmen 12 verklipst oder – wie dargestellt – bereichsweise im Spiegelaufnahmerahmen 12 durch Umspritzen eingebettet sein, wobei Öffnungen 17 im Zusatzrahmen 16 für eine besonders gute Verankerung sorgen. Der Zusatzrahmen 16, dessen Rahmenschenkel ein einfaches rechteckiges Querschnittsprofil besitzen, besteht aus einem hochfrequenzschweissbaren Material, wodurch zum einen ermöglicht wird, das Kunststoff-Spritzguss-Formteil mit allen Bestandteilen aus einem billigen thermo- oder duroplastischen Material herzustellen und zum andern ermöglicht wird, die Umhüllungsfolie 17', mit der das auf der Strebe aufliegende Polstermaterial 18 ummantelt ist, anzuschweissen. Im allgemeinen dürfte dabei eine die Spiegelöffnung 19 umgebende Schweissnaht 20 genügen, obgleich es natürlich auch möglich ist, eine zweite Schweissnaht 21 vorzusehen.

Bei der Herstellung der Sonnenblende wird zunächst ein Drahtabschnitt in einer Ebene zu einem etwa rechteckigen Rahmen 1 gebogen. Dieser Drahtrahmen wird dann in das Formnest einer Kunststoffspritzgussmaschine (nicht gezeigt) eingelegt, wobei das Formnest Ausnehmungen für die Bildung des Kunststoff-Spritzguss-Formteils 2 und ggf. des Lagergehäuses 7, der Gegenlagerachse 8 und des Spiegelaufnahmerahmens 12 aufweist. Weiterhin wird in das Formnest ggf. die Momentenfeder 11, der Spiegel 14 und der Zusatzrahmen 16 eingelegt und durch entsprechende Einrichtungen gehalten. Nachdem das Formnest geschlossen worden ist, wird um die darin befindlichen Rahmenbereiche und Einlegeteile herum das Kunststoff-Spritzguss-Formteil 2 mit Längsstrebe 3, Querstreben 4, Lagergehäuse 7, Gegenlagerachse 8 und Spiegelaufnahmerahmen 12 spritzgegossen. Die so gebildete Einheit wird mit Schaumstoffauflagen vorzugsweise unter Zwischenfügung eines Klebers versehen und anschliessend mit einer Hüllfolie ummantelt.

**Patentansprüche**

1. Sonnenblende für Fahrzeuge, deren Blendenkörper (13) eine von einer Polsterung übergriffene, aus einem metallischen Drahtrahmen (1) bestehende Verstärkungseinlage aufweist, die eine etwa rechteckige Grundform besitzt, wobei zumindest in einem Eckbereich an der Oberkante des Drahtrahmens (1) ein Lagergehäuse (7) angeordnet ist, dadurch gekennzeichnet, dass der Drahtrahmen (1) eine Rahmenaussteifung aufweist, die aus einem einstückig ausgebildeten Kunststoff-Spritzguss-Formteil besteht, dass die Rahmenaussteifung eine mit den Enden unmittelbar an den kurzen Schenkeln des Drahtrahmens (1) angespritzte Längsstrebe (3) sowie mit den Enden unmittelbar an den langen Schenkeln des Drahtrahmens (1) angespritzte Querstreben (4) und einstückig das Lagergehäuse (7), welches unmittelbar am Drahtrahmen (1) angespritzt ist aufweist und dass die Drahtenden des Drahtrahmens (1) unlösbar im Lagergehäuse (7) eingebettet sind.

2. Sonnenblende nach Anspruch 1, dadurch gekennzeichnet, dass das Kunststoff-Spritzguss-Formteil (2) mit einer oberen und einer unteren parallel zur Rahmenebene ausgerichteten, im wesentlichen ebenen Auflagefläche (6) ausgebildet ist.

3. Sonnenblende nach Anspruch 1 oder 2, dadurch gekennzeichnet, dass das Kunststoff-Spritzguss-Formteil (2) einstückig und materialeinheitlich mit einem Spiegelaufnahmerahmen (12) ausgebildet ist.

4. Sonnenblende nach Anspruch 3, dadurch gekennzeichnet, dass der Spiegelaufnahmerahmen (12) eine gegenüber den Streben (3 und 4) in der Ebene versetzte Anordnung aufweist.

5. Sonnenblende nach Anspruch 3 oder 4, dadurch gekennzeichnet, dass am Spiegelaufnahmerahmen (12) ein Auflager für den Spiegel (14) angeformt ist, welches aus einem umlaufenden Falz oder aus den Spiegel (14) rückseitig abstützenden Nocken (15) besteht.

6. Sonnenblende nach einem oder mehreren der Ansprüche 3 bis 5, dadurch gekennzeichnet, dass der Spiegelaufnahmerahmen (12) mit einem Zusatzrahmen (16) verbunden ist, der auf der Sichtseite des Spiegels (14), dessen umlaufenden Randbereich bedeckend, aufliegt und aus hochfrequenzschweissbarem Material besteht.

7. Sonnenblende nach Anspruch 6, dadurch gekennzeichnet, dass der Zusatzrahmen (16) bereichsweise durch Umspritzen in dem Spiegelaufnahmerahmen (12) eingebettet ist.

8. Sonnenblende nach Anspruch 6, dadurch gekennzeichnet, dass der Zusatzrahmen (16) durch ineinanderrastbare Klipselemente mit dem Spiegelaufnahmerahmen (12) verbunden ist.

9. Sonnenblende nach einem der Ansprüche 6 bis 8, dadurch gekennzeichnet, dass der Zusatzrahmen (16) über ein Filmscharnier einstückig mit einer Spiegelabdeckklappe ausgebildet ist.

10. Sonnenblende nach Anspruch 1, dadurch gekennzeichnet, dass das Lagergehäuse (7) eine durch Umspritzen eingelagerte, die Sonnenblendenachse radial beaufschlagende Feder (11) aufweist.

11. Sonnenblende nach einem oder mehreren der Ansprüche 1 bis 10, dadurch gekennzeichnet, dass das Kunststoff-Spitzguss-Formteil (2) einstückig und materialeinheitlich mit einer Gegenlagerachse (8) ausgebildet ist und dass in der Gegenlagerachse (8) ein Drahtabschnitt des Rahmens (1) eingelagert ist.

12. Verfahren zum Herstellen einer Sonnenblende nach einem oder mehreren der Ansprüche 1 bis 11, gekennzeichnet durch die Arbeitsschritte:

a) ein Drahtabschnitt wird in einer Ebene zu einem etwa rechteckigen Rahmen gebogen,

b) der Rahmen wird in eine Spritzgussmaschine eingelegt, wobei Teilbereiche desselben innerhalb des Formnestes berührungsfrei zu liegen kommen,

c) die jeweils parallel zueinander verlaufenden Rahmenschenkel werden miteinander verbunden, wozu innerhalb des Formnestes und um die berührungsfrei darin liegenden Teilbereiche des Rahmens herum ein Kunststoff-Spritzguss-Formteil mit einer Längsstrebe und mehreren Querstreben spritzgegossen wird.

13. Verfahren zum Herstellen einer Sonnenblende nach einem oder mehreren der Ansprüche 1 bis 11, dadurch gekennzeichnet, dass ein Drahtabschnitt in einer Ebene zu einem etwa rechteckigen Rahmen gebogen und innerhalb der Rahmenöffnung ein Kunststoffkörper, der Teilbereiche des Rahmens bzw. der Rahmenschenkel umschliesst, spritzgegossen wird, wobei in einem Schuss ein Längssteg, der mit Querstreben versehen ist, ein Lagergehäuse, eine Gegenlagerachse und ein Spiegelaufnahmerahmen spritzgegossen wird.

**Claims**

1. A sun visor for a vehicle, the sun visor comprising a visor body (13) provided with a reinforcing insert which is a metal frame (1) formed of a wire and covered by padding and the basic shape of which is substantially rectangular, in which a bearing shell (7) is arranged at the upper edge of the wire frame (1) in the vicinity of at least one of its corners, characterized in that the wire frame (1) is provided with a stiffening member which is a one-piece injection-moulded moulding of a plastics material, that the stiffening member includes

1) a longitudinal strut (3) the ends of which are moulded directly on to a respective one of the wire frame's (1) short legs, and

2) transverse struts (4) the respective ends of which are moulded directly on to a respective one of the wire frame's (1) long legs and, respectively, moulded integrally with the bearing shell (7) which in turn is moulded directly on to the wire frame (1),

and in that the end portions of the wire frame (1) are irremovably embedded in the bearing shell (7).

2. A sun visor according to claim 1, characterized in that the injection-moulded plastics moulding (2) is formed with an upper and a lower contact surface (6) both of which are substantially flat and parallel with the plane containing the wire frame.

3. A sun visor according to claim 1 or claim 2, characterized in that the injection-moulded plastics moulding (2) is formed integrally with and of the same material as a frame (12) serving to hold a mirror.

4. A sun visor according to claim 3, characterized in that the mirror-holding frame (12) is contained in a plane transposed in relation to that of the struts (3 and 4).

5. A sun visor according to claim 3 or claim 4, characterized in that the mirror-holding frame (12) is formed integrally with an abutment for the mirror (14), the abutment being either a continuous rabbet or a number of dogs (15) supporting the rear of the mirror (14).

6. A sun visor according to any one or more of the claims 3 to 5, characterized in that the mirror-holding frame (12) is joined to an additional frame (16) which rests all along and covers the edge portions of the mirror's (14) front and which is produced of a high-frequency weldable material.

7. A sun visor according to claim 6, characterized in that sections of the additional frame (16) are embedded in the mirror-holding frame (12) as a result of the latter having been moulded around them.

8. A sun visor according to claim 6, characterized in that the additional frame (16) is secured to the mirror-holding frame (12) by interlockable snap-in elements.

9. A sun visor according to any of the claims 6 to 8, characterized in that the additional frame (16) is integrally joined to a mirror-protecting cover, the joint being a hinge formed by a thickness-reduced section of the material.

10. A sun visor according to claim 1, characterized in that the bearing shell (7) includes a spring (11) encased therein while the shell is moulded, and in that the spring serves to bias the visor's shaft in radial direction.

11. A sun visor according to any one or more of the claims 1 to 10, characterized in that a counterbalancing shaff (8) is formed integrally with and of the same material as the injection-moulded plastics moulding (2), and in that a section of the wire frame (1) is encased in the counter-balancing shaft (8).

12. A method of manufacturing a sun visor according to any one or more of the claims 1 to 11, characterized by the following operational steps:

a) a length of wire is bent into a planar substantially rectangular frame;

b) the frame is inserted into an injection-moulding machine in such a way that sections of the frame remain out of contact with the mould;

c) each two of the frame legs running parallel with each other are connected to one another by injection-moulding within the mould and around said frame's sections not in contact therewith an injection-moulded plastics moulding having one longitudinal strut and a number of transverse struts.

13. A method of manufacturing a sun visor according to any one or more of the claims 1 to 11, characterized in that a length of wire is bent into a planar substantially rectangular frame, that a plastics member is injection-moulded within the space defined by the frame so as to surround sections of the frame, or of the frame's legs, and in that a longitudinal strut provided with transverse struts, a bearing shell, a counter-balancing shaft and a mirror-holding frame are injection-moulded by a single squirt.

**Revendications**

1. Pare-soleil pour véhicules, dont le corps (13) comprend une garniture de renforcement recouverte par un rembourrage et constituée par un cadre en fil métallique (1), présentant une forme sensiblement rectangulaire, un logement de palier (7) étant prévu de préférence dans une région d'angle sur le bord supérieur du cadre en fil métallique (1), caractérisé en ce que le cadre en fil métallique (1) comprend un élément de renforcement constitué par un élément en matière plastique moulé par injection d'un seul tenant, en ce que l'élément de renforcement comprend une traverse longitudinale (3) raccordée par ses extrémités directement par moulage aux branches courtes du cadre en fil métallique (1) ainsi que des bandes transversales (4) raccordées par leurs extrémités directement par moulage aux branches longues du cadre en fil métallique (1), et d'un seul tenant le logement de palier (7) qui est moulé directement sur le cadre en fil métallique (1), et en ce que les extrémités du cadre en fil métallique (1) sont noyées fermement dans le logement de palier (7).

2. Pare-soleil selon la revendication 1, caractérisé en ce que l'élément en matière plastique moulé par injection (2) comprend des surfaces d'appui supérieure et inférieure (6), sensiblement planes et parallèles au plan du cadre.

3. Pare-soleil selon la revendication 1 ou 2, caractérisé en ce que l'élément en matière plastique moulé par injection (2) est constitué d'un seul tenant et du même matériau qu'un cadre d'insertion de miroir (13).

4. Pare-soleil selon la revendication 3, caractérisé en ce que le cadre de réception de miroir (12) est disposé dans un plan qui est décalé par rapport à celui des bandes (3 et 4).

5. Pare-soleil selon la revendication 3 ou 4, caractérisé en ce qu'un appui pour le miroir (14) est formé sur le cadre de réception de miroir (12), cet appui étant constitué par une rainure périphérique ou par des saillies (15) supportant le miroir (14) par son côté arrière.

6. Pare-soleil selon l'une ou plusieurs des revendications 3 à 5, caractérisé en ce que le cadre de réception de miroir (12) est relié à un cadre additionnel (16) qui s'applique sur le côté visible du miroir (14) en recouvrant sa région de pourtour périphérique et est constitué en un matériau pouvant être soudé par soudure haute fréquence.

7. Pare-soleil selon la revendication 6, caractérisé en ce que le cadre additionnel (16) est partiellement noyé par surmoulage par injection dans le cadre de réception de miroir (12).

8. Pare-soleil selon la revendication 6, caractérisé en ce que le cadre additionnel (16) est relié au cadre de réception de miroir (12) par des éléments d'enclipsage pouvant s'enclencher les uns dans les autres.

9. Pare-soleil selon l'une quelconque des revendications 6 à 8, caractérisé en ce que le cadre additionnel (16) est constitué d'un seul tenant avec un volet de recouvrement de miroir comprenant une charnière à film.

10. Pare-soleil selon la revendication 1, caractérisé en ce que le logement de palier (7) comprend un ressort (11) incorporé par surmoulage et appliquant une force radiale sur l'axe du pare-soleil.

11. Pare-soleil selon l'une ou plusieurs des revendications 1 à 10, caractérisé en ce que l'élément en matière plastique moulé par injection (2) est constitué d'un seul tenant et du même matériau qu'un contre-axe d'appui (8) et en ce qu'une section de fil du cadre (1) est noyée dans le contre-axe d'appui (8).

12. Procédé pour réaliser un pare-soleil selon une ou plusieurs des revendications 1 à 11, caractérisé par les opérations suivantes:

a) on replie une section de fil métallique dans un plan pour former un cadre sensiblement rectangulaire,

b) on dispose le cadre dans une machine de moulage par injection, des régions partielles de ce cadre étant disposées sans contact à l'intérieur de la cavité du moule,

c) les branches du cadre qui sont respectivement parallèles sont reliées les unes aux autres en moulant par injection un élément en matière plastique comprenant une traverse longitudinale et plusieurs bandes transversales à l'intérieur de la cavité du moule et autour des régions partielles du cadre disposées sans contact à l'intérieur.

13. Procédé pour réaliser un pare-soleil selon l'une ou plusieurs des revendications 1 à 11, caractérisé en ce qu'on replie une section de fil métallique dans un plan pour former un cadre sensiblement rectangulaire et on moule par injection à l'intérieur de l'ouverture du moule un corps en matière plastique qui entoure des régions partielles du cadre ou des branches du cadre, le procédé permettant le moulage par injection en une seule fois d'une traverse longitudinale munie de bandes transversales, d'un logement de palier, d'un contre-axe d'appui et d'un cadre de réception de miroir.

0 111 819

Fig5

Fig2

Fig3

Fig4

Fig1

7